# EUROPÄISCHE PATENTSCHRIFT

(11) **EP 2 466 728 B1**
(45) Veröffentlichungstag und Bekanntmachung des Hinweises auf die Patenterteilung: **19.07.2023**
(21) Anmeldenummer: 11008477.9
(22) Anmeldetag: 21.10.2011
(51) Int. Cl.: H02K 5/128

(54) **Kunststoffspalttopf für Kreiselpumpen**
Plastic air gap sleeve for circulation pumps
Chemise d'entrefer en matière synthétique pour pompes centrifuges

(30) Priorität: 15.12.2010 DE 102010054577
(43) Veröffentlichungstag der Anmeldung: 20.06.2012
(73) Patentinhaber: WILO SE, 44263 Dortmund (DE)
(72) Erfinder: Dreihaus, Uwe, 59067 Hamm (DE); Diekkämper, Lars, 44229 Dortmund (DE)
(74) Vertreter: Cohausz Hannig Borkowski Wißgott

(56) Entgegenhaltungen:
- EP-A1- 1 552 159
- EP-B1- 1 552 159
- DE-B- 1 075 435
- DE-C1- 4 342 649
- DE-U1- 9 303 934
- JP-A- H07 111 752

## Beschreibung

Die Erfindung betrifft eine Motorkreiselpumpe enthaltend ein Motorengehäuse, ein Pumpengehäuse und einen Elektromotor, der einen aus Kunststoff bestehenden Spalttopf oder ein Spaltrohr mit einem das offene Ende umgebenden koaxialen, ringförmigen Flansch aus Kunststoff aufweist, wobei ein Bereich des Spalttopfes oder Spaltrohres zwischen dem Motorenstator und dem Rotor liegt und der Flansch derart zwischen dem Motorengehäuse und dem Pumpengehäuse liegt, dass er als Ringflansch einen Pumpenraum, in dem sich ein Laufrad befindet, von einem Raum des Elektromotors trennt, in dem der Motorenstator mit seinen Wicklungen angeordnet ist.

Eine Motorkreiselpumpe mit einer derartigen Konstruktion ist aus der deutschen Auslegeschrift DE 1075435 bekannt.

DE 1075435 offenbart:

Motorkreiselpumpe enthaltend ein Motorengehäuse, ein Pumpengehäuse und einen Elektromotor, der einen Spalttopf oder Spaltrohr mit einem ein offenes Ende umgebenden koaxialen, ringförmigen Flansch aufweist, wobei ein Bereich des Spalttopfes oder Spaltrohres zwischen dem Motorenstator und dem Rotor liegt und der Flansch derart zwischen dem Motorengehäuse und dem Pumpengehäuse liegt, dass er als Ringflansch den Pumpenraum, in dem das Laufrad sich befindet, von dem Raum des Elektromotors trennt, in dem der Motorenstator mit seinen Wicklungen angeordnet ist.

Es ist allgemein bekannt, bei Pumpen Spaltrohre oder Spalttöpfe einzusetzen, die es ermöglichen, dass der Rotorraum des Elektromotors der Kreiselpumpe von der Förderflüssigkeit durchflossen wird. Durch das Verwenden von Kunststoff werden bei solchen Nassläufermotoren die Wirkungsgradverluste durch Wirbelströme verringert, die bei metallenen Spalttöpfen und Spaltrohren auftreten. Das Verwenden von Kunststoff führt aber zu dem Nachteil, dass die Erdung, d. h. die Verbindung des Fördermediums zum Schutzleiter (PE), bei bestimmten Pumpenkonstruktionen nicht mehr gewährleistet ist.

Aus dem deutschen Gebrauchsmuster DE 9303934 U1 ist ein Spalttopf bekannt, der der Trennung zwischen dem Außenmagneten und dem Innenmagneten einer magnetischen Antriebskupplung einer Pumpe dient. Um den Anforderungen der chemischen Technik zu genügen, besteht der Spalttopf aus einem korrosionsfesten Innentopf und einem damit stoffschlüssig verbundenen Außentopf aus einem Thermoplast hoher Festigkeit und geringem elektrischen Widerstand.

Aufgabe der Erfindung ist es, bei einer Motorkreiselpumpe einen Spalttopf oder ein Spaltrohr aus Kunststoff derart zu verbessern, dass ein Anschluss des Fördermediums an den Schutzleiter gesichert ist.

Diese Aufgabe wird erfindungsgemäß durch die Merkmale des Anspruchs 1 gelöst, wobei der Flansch beidseitig ganzflächig oder teilflächig elektrisch leitend ist und die leitenden Flächen beider Flanschseiten miteinander leitend verbunden sind.

Damit ist eine Erdung sicher gegeben, obwohl der zwischen dem Motorenstator und dem Rotor liegende Bereich des Spalttopfes oder Spaltrohrs weiterhin aus Kunststoff besteht und damit Wirkungsgradverluste durch Wirbelströme nicht auftreten können. Es besteht damit ein Spalttopf/Spaltrohr mit Lagerträger, der im "aktiven" Motorbereich nicht leitend und auf der dem Wasser zugewandten Pumpenseite elektrisch leitend ist zur Gewährleistung des Potentialausgleiches (Erdung).

Zudem wird vorgeschlagen, dass mindestens eine Seitenfläche des Flansches mit einem leitenden Material insbesondere Metall beschichtet ist. Hierbei kann das leitende Material auf eine oder beide Seitenflächen des Flansches aufgedruckt sein.

In einer weiteren Alternative wird vorgeschlagen, dass der Flansch teilweise oder vollständig aus einem elektrisch leitenden Kunststoff besteht. Hierbei kann der Kunststoff ein durch Dotieren elektrisch leitendes Polymer sein.

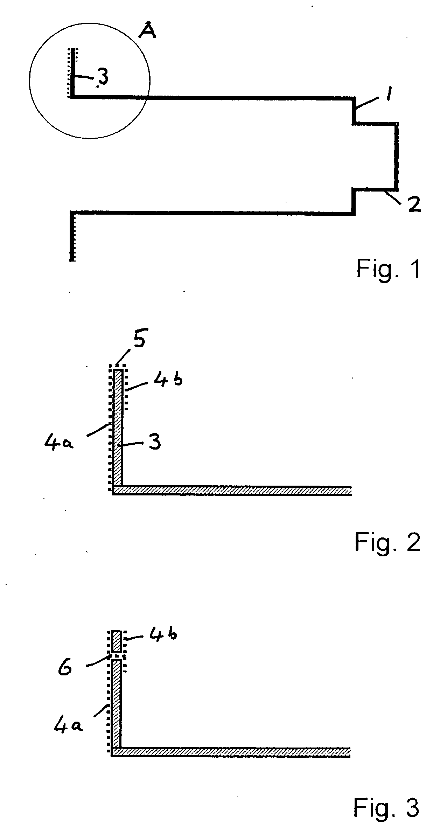

Ausführungsbeispiele der Erfindung sind in den Zeichnungen in axialen Schnitten schematisch dargestellt und werden im Folgenden näher beschrieben. Es zeigen
- Figur 1: einen Schnitt durch einen Spalttopf mit Kunststoffflansch beidseitig beschichtet oder bedruckt mit leitenden Schichten,
- Figur 2: den Ringflansch eines Kunststoff-Spalttopfes mit randseitiger Verbindung beider leitender Schichten im Ausschnitt A in Fig. 1,
- Figur 3: den Ringflansch eines Kunststoff-Spalttopfes nach Fig. 2 mit einer Durchtrittsöffnung für eine leitende Verbindung beider leitender Schichten miteinander.

Der Spalttopf einer Motorkreiselpumpe ist aus Kunststoff insbesondere einem Polymer ausgeführt und besitzt an seinem geschlossenen Ende einen Boden 1 mit daran angeformtem topfförmigen Rohrabschnitt 2 zur Aufnahme eines Lagers, wobei am offenen Ende des Spalttopfes ein Ringflansch 3 als Lagerschild koaxial und nach außen radial vorstehend aus Kunststoff angeformt ist. Der Ringflansch trennt damit den Pumpenraum, in dem das Pumpenlaufrad sich befindet, von dem Raum des Elektromotors, in dem der Motorenstator mit seinen Wicklungen angeordnet ist.

Um eine elektrische Verbindung zwischen dem in der Pumpe befindlichen Fördermedium und dem Schutzleiter (PE) zu schaffen, befinden sich auf beiden Seiten des Ringflansches 3 elektrisch leitende Bereiche 4a, 4b, die über eine Verbindung 5 miteinander elektrisch leitend verbunden sind. Der den Pumpenraum begrenzende leitende Bereich 4a bedeckt diese Seitenfläche des Ringflansches im Wesentlichen ganzflächig und der den Motorenraum begrenzende leitende Bereich 4b kann diese zweite Seitenfläche ganzflächig bedecken, aber es genügt auf dieser zweiten Seitenfläche eine kleine leitende Stelle als leitender Bereich 4b.

Die leitenden Bereiche 4a, 4b sind metallene Beschichtungen, die auf dem Kunststoff aufgebracht insbesondere aufgesprüht oder aufgedruckt werden.

Die Verbindung zwischen beiden leitenden Bereichen 4a, 4b wird entweder durch einen den äußeren Flanschrand übergreifenden Bereich 5 gebildet oder durch eine Öffnung 6, durch die leitendes metallisches Material verläuft.

Bei einer weiteren alternativen Ausführung besteht der Ringflansch 3 aus einem elektrisch leitenden Kunststoff, das am offenen Ende des Spalttopfes an dessen Kunststoff befestigt insbesondere angeformt ist. Hierbei wird der Kunststoff des Ringflansches 3 auf die unterschiedlichsten Arten elektrisch leitend gemacht. So geschieht dies z. B. durch Dotieren eines Polymers durch Substanzen, die eine Reduktion oder eine Oxidation erzeugen.

Alle genannten Ausführungen sind statt bei einem Spalttopf auch bei einem Spaltrohr ausführbar.

## Patentansprüche

1. Motorkreiselpumpe enthaltend ein Motorengehäuse, ein Pumpengehäuse und einen Elektromotor, der einen aus Kunststoff bestehenden Spalttopf oder Spaltrohr mit einem ein offenes Ende umgebenden koaxialen, ringförmigen Flansch (3) aus Kunststoff aufweist, wobei ein Bereich des Spalttopfes oder Spaltrohres zwischen dem Motorenstator und dem Rotor liegt und der Flansch (3) derart zwischen dem Motorengehäuse und dem Pumpengehäuse liegt, dass er als Ringflansch den Pumpenraum, in dem das Laufrad sich befindet, von dem Raum des Elektromotors trennt, in dem der Motorenstator mit seinen Wicklungen angeordnet ist, wobei der Flansch (3) beidseitig ganzflächig oder teilflächig elektrisch leitend ist und die leitenden Flächen (4a, 4b) beider Flanschseiten miteinander leitend verbunden sind.

2. Motorkreiselpumpe nach Anspruch 1, **dadurch gekennzeichnet, dass** beide Seitenflächen des Flansches (3) zumindest teilweise mit einem leitenden Material insbesondere Metall beschichtet sind.

3. Motorkreiselpumpe nach Anspruch 2, **dadurch gekennzeichnet, dass** das leitende Material auf eine oder beide Seitenflächen des Flansches (3) aufgedruckt ist.

4. Motorkreiselpumpe nach einem der vorherigen Ansprüche, **dadurch gekennzeichnet, dass** der Flansch (3) teilweise oder vollständig aus einem elektrisch leitenden Kunststoff besteht.

5. Motorkreiselpumpe nach Anspruch 4, **dadurch gekennzeichnet, dass** der Kunststoff ein durch Dotieren elektrisch leitendes Polymer ist.

## Claims

1. Motor-driven rotary pump comprising a pump casing and an electric motor, having a separating can or split tube made of a synthetic material with a coaxial, annular flange (3) made of a synthetic material encompassing an open end, in which an area of the separating can or split tube lies between the motor stator and the rotor, and the flange (3) lies between the motor housing and the pump casing so that it serves as an annular flange, separating the pump chamber that houses the impeller from the chamber of the electric motor that houses the motor stator with its windings, in which the full or partial surfaces on both sides of the flange (3) are electrically conductive and there is a conductive connection between the conductive surfaces (4a, 4b) on both sides of the flange.

2. Motor-driven rotary pump according to claim 1, **characterised by** both lateral faces of the flange (3) being at least partially coated with a conductive material, notably metal.

3. Motor-driven rotary pump according to claim 2, **characterised by** the conductive material being printed on one or both lateral faces of the flange (3).

4. Motor-driven rotary pump according to one of the preceding claims, **characterised by** the flange (3) consisting of a partially or fully electrically conductive synthetic material.

5. Motor-driven rotary pump according to claim 4, **characterised by** the synthetic material being a polymer made electrically conductive by doping.

## Revendications

1. Motopompe centrifuge comprenant un carter de moteur, un carter de pompe et un moteur électrique présentant un pot d'entrefer ou une gaine en matière plastique avec une bride annulaire coaxiale (3) en matière plastique entourant une extrémité ouverte, sachant qu'une zone du pot d'entrefer ou de la gaine est située entre le stator du moteur et le rotor et que la bride (3) est située entre le carter du moteur et le carter de la pompe, qu'elle sépare, en tant que bride annulaire, la chambre de la pompe dans lequel se trouve le rotor, de l'espace du moteur électrique, dans lequel est disposé le stator du moteur avec ses enroulements, sachant que la bride (3) est conductrice électriquement des deux côtés, sur toute ou partie de sa surface, les surfaces conductrices (4a, 4b) des deux côtés de la bride étant reliées entre elles de manière conductrice.

2. Motopompe centrifuge selon la revendication 1, **caractérisée en ce que** les deux surfaces latérales de la bride (3) sont du moins en partie revêtues d'un matériau conducteur, tout particulièrement de métal.

3. Motopompe centrifuge selon la revendication 2, **caractérisée en ce que** le matériau conducteur est imprimé sur l'une ou les deux faces latérales de la bride (3).

4. Motopompe centrifuge selon l'une des revendications précédentes, **caractérisée en ce que** la bride (3) est partiellement ou complètement constituée d'une matière plastique conductrice de l'électricité.

5. Motopompe centrifuge selon la revendication 4, **caractérisée en ce que** la matière plastique est un polymère électriquement conducteur par dopage.
